# EUROPEAN PATENT SPECIFICATION

(11) **EP 2 932 061 B1**
(45) Date of publication and mention of the grant of the patent: **10.01.2018**
(21) Application number: 13864898.5
(22) Date of filing: 25.11.2013
(51) Int. Cl.: F01P 7/16, B60T 10/02, B60T 5/00, F16D 65/78, F16D 57/00

(54) **COOLING SYSTEM**
KÜHLSYSTEM
SYSTÈME DE REFROIDISSEMENT

(30) Priority: 17.12.2012 SE 1251433
(43) Date of publication of application: 21.10.2015
(73) Proprietor: Scania CV AB, 151 87 Södertälje (SE)
(72) Inventor: KARDOS, Zoltan, S-151 35 Södertälje (SE); HALL, Ola, S-117 67 Stockholm (SE)
(74) Representative: Scania CV AB
(86) International application number: PCT/SE2013/051381
(87) International publication number: WO 2014/098709

(56) References cited:
- EP-A1- 1 702 820
- EP-A1- 1 702 820
- EP-A2- 1 083 309
- EP-A2- 1 270 896
- WO-A1-2006/027132
- WO-A1-2008/080872
- WO-A1-2012/148344
- CN-U- 202 578 887
- CN-U- 202 578 887
- DE-B3-102007 055 604
- FR-A1- 2 260 030
- KR-A- 20100 059 390

## Description

### TECHNICAL FIELD AND PRIOR ART

The present invention relates to a cooling system according to the preamble to the attached claim 1.

Cooling systems of this type are principally, but not exclusively, used in wheeled working vehicles, such as lorries and buses, which may require an accessory brake in the form of a hydrodynamic retarder.

Such a hydrodynamic retarder is previously known through, for example, US 5,829,562. Oil is normally used as retarding medium as in the retarder connected to the cooling system disclosed in WO 2012/148344 A1. The oil will then, during braking by means of the retarder, be heated and cooled in a heat exchanger, normally a heavy-duty plate heat exchanger, by a cooling fluid that circulates around a cooling circuit according to the above. Thus, there is here an oil circuit that dampens the power developed from the retarder to the cooling fluid in the cooling circuit during retarder braking. Only one part - to be more precise, the cooling fluid cooler - in such a cooling system has a power that varies rapidly, for which reason a thermostat device should be arranged such that it is influenced through a pilot line by the temperature of the cooling fluid immediately after the cooling fluid cooler. Such a thermostat device is used to regulate the temperature of the cooling fluid in the cooling system, and normally demonstrates a temperature-dependent activation element with a wax body. Depending on the temperature of the cooling fluid, the thermostat device leads cooling fluid that flows out from the combustion engine to a cooler in order there to be cooled, before the cooling fluid is returned to the combustion engine or directly back to the combustion engine without passage through the cooler.

In a cooling system of the type defined in the introduction, where cooling fluid flowing around the cooling circuit replaces the oil as retarding medium in the retarder, the retarder will also become rapid, in the sense that the power that is transferred during retarder braking to the cooling fluid will be significantly higher than it is in the case of an oil circuit, even if the amount of heat that is transferred to the cooling fluid is the same in the two cases. It follows that there are here two parts in the cooling circuit, the retarder and the cooling fluid cooler, which are rapid and for which a short feedback time of a thermostat arrangement is required in order to suppress temperature oscillations in the cooling fluid and thus the load on the components that are included in the cooling circuit, principally the cooling elements in the cooling fluid cooler. The retarder and the cooling fluid cooler are, however, normally located at totally different locations in the cooling fluid system, which makes the desired placement of a thermostat arrangement in such a cooling system more difficult.

### SUMMARY OF THE INVENTION

The object of the present invention is to provide a cooling system for a motor vehicle of the type defined in the introduction through which an advantageous function is achieved with respect to rapid and appropriate response to power that is transferred to the cooling fluid, not only in the cooling fluid cooler, but also in the retarder.

This object is achieved according to the invention through arranging in a cooling system of the type defined in the introduction a thermostat arrangement that comprises a second thermostat device arranged to receive cooling fluid in the first line from the retarder and to regulate the flow of cooling fluid to the cooling fluid cooler and to the said third line depending on the temperature of the cooling fluid received, and through designing the second thermostat device to open for flow in the cooling circuit of cooling fluid that arrives at it onwards to the cooling fluid cooler with effect from a second temperature that is at least 5 K higher than a first temperature of cooling fluid arriving at the first thermostat device in the said pilot line from which this first thermostat device is designed to open for flow of cooling fluid that arrives at this thermostat device from the retarder in the first line of the cooling circuit onwards to the cooling fluid cooler.

This means that during normal operation of the motor vehicle, i.e. in the case in which braking with the involvement of the hydrodynamic retarder does not occur, only the first thermostat device of the thermostat arrangement will control the temperature of the cooling fluid, since the temperature of the cooling fluid that arrives at the second thermostat device after passage through the combustion engine will not be able to reach the said second temperature and thus the second thermostat device will remain all the time in a condition in which it does not lead any cooling fluid onwards to the cooling fluid cooler. During sufficiently powerful retarder braking, in contrast, the temperature of the cooling fluid that arrives at the second thermostat device from the retarder will have been increased to a temperature above the said second temperature, such that the second thermostat device will then open for flow of the cooling fluid onwards to the cooling fluid cooler. Thus, the reaction of the thermostat arrangement to the retarder braking will be very rapid, due to the arrangement of the second thermostat device. It follows that an accurate regulation of the flow of cooling fluid is achieved with the cooling system according to the invention, with a short response time with respect to not only the retarder effect but also the cooling fluid effect.

CN 202 578 887 U discloses a cooling system with a parallel connection of two thermostat devices in a line from a retarder. In case of such a parallel connection of two thermostat devices the operation of the thermostat devices will be without feedback from the temperature of the cooling fluid at the inlet of the engine, and if the temperature of the cooling fluid arriving from the retarder will open the second thermostat device at a high load this will be open longer than necessary, since the cooler has then reacted powerfully and lowered the temperature in the cooling fluid but this thermostat device will not be informed thereof until a long time later when the cooling fluid passes the engine and the retarder again. The lap time will be long in that case compared to if cooling fluid from the cooler combined with some engine (retarder) cooling fluid would adjust the body of the first thermostat device rapidly so as to avoid under oscillations and by that over oscillations also in the cooling system.

According to one embodiment of the invention, the second thermostat device is designed to open for flow of cooling fluid to the cooler with effect from a second temperature that is 5-20 K, 5-15 K, 8-15 K or 8-12 K higher than the said first temperature. It has proved to be the case that a difference between the said second temperature and the said first temperature of approximately 10 K is, in many cases, suitable, since this is sufficient to ensure that the temperature of the cooling fluid that arrives at the second thermostat device after passage through the combustion engine during normal driving without retarder braking will not have been able to reach the said second temperature, since the increase in temperature of the cooling fluid from its passage through the combustion engine in normally a maximum of approximately 10 K. In certain types of engine and cooling system, this maximal rise in temperature could be lower, and in this case a smaller difference between the first and the second temperature can be accepted.

According to a further embodiment of the invention, the said first temperature is 70-90 °C or 75-85 °C. This is a suitable temperature at which cooling fluid in the cooling circuit of a cooling system of this type should start to be led through a cooling fluid cooler in order to emit heat to it.

According to a further embodiment of the invention, the said two thermostat devices are arranged in one and the same thermostat housing, which demonstrates an inlet channel that is common to the thermostat devices and that is connected through a first section of line of the first line to an outlet of the retarder, and the thermostat housing demonstrates at least one first outlet channel connected through a second section of line of the first line to the cooling fluid inlet of the cooling fluid cooler, and a second outlet channel connected to the said third line. The thermostat arrangement obtains in this way one single physical position while even so obtaining with respect to regulation the two positions that are required since the rapid parts with respect to effect (the retarder and the cooling fluid cooler) are located at different locations in the cooling system. By collecting the two thermostat devices in a single thermostat housing, the placement of the thermostat arrangement is simplified, and the requirement for space that it occupies is kept at a low level. Thus, it is advantageous that the thermostat housing demonstrate a single first outlet channel that is common to the two thermostat devices, which has an advantageous effect on the requirement for space that the thermostat arrangement has.

According to a further embodiment of the invention, the said second thermostat device demonstrates a valve body that can be displaced between different positions for the regulation of the flow of cooling fluid from the said retarder to the cooling fluid cooler and to the said third line, a temperature-dependent activation element and a displaceable part designed such that when it is displaced it carries with it the valve body, the activation element is arranged to influence the displacement position of the said part and in this way the valve body depending on the temperature of the cooling fluid that is received from the retarder, the valve body demonstrates a valve device in the form of a first plate element that is designed such that at a first end position of the valve body it is in contact with a second plate element that forms a valve seating between an inlet in the second thermostat device from the retarder and an outlet to the cooling fluid cooler such that through this contact it prevents cooling fluid from flowing through this thermostat device to the cooling fluid cooler, and that the first plate element is arranged such that it can be displaced under the influence of the activation element away from the said position in which it is in contact with the second plate element in order to open a connection between the inlet of the second thermostat device and the outlet to the cooling fluid cooler.

According to a further embodiment of the invention, the said first thermostat device demonstrates a valve body that can be displaced between different positions for the regulation of the flow of cooling fluid from the said retarder to the cooling fluid cooler and to the said third line, a temperature-dependent activation element and a displaceable part designed such that when it is displaced it carries with it the valve body, the activation element is arranged to influence the displacement position of the said part and in this way the valve body depending on the temperature of the cooling fluid that is received through the pilot line, the valve body demonstrates a valve device in the form of a first plate element that is designed such that at a first end position of the valve body it is in contact with a second plate element that forms a valve seating between an inlet in the first thermostat device from the retarder and an outlet to the cooling fluid cooler such that through this contact it prevents cooling fluid from flowing through this thermostat device to the cooling fluid cooler, and that the first plate element is arranged such that it can be displaced under the influence of the activation element away from the said position in which it is in contact with the second plate element in order to open a connection between the inlet of the first thermostat device and the outlet to the cooling fluid cooler.

According to a further embodiment of the invention, the said valve body comprises a second valve device that can be received when at a second end position of the valve body in a valve seating in order to prevent in this way cooling fluid that arrives at the thermostat device in question from the retarder from flowing to the said third line. In this way, it can be prevented, when intense cooling of the cooling fluid is required, in particular during intense retarder braking, that cooling fluid that arrives at the thermostat device in question flows at this thermostat device onwards to the cooling fluid inlet of the combustion engine without passing through the cooling fluid cooler.

According to a further embodiment of the invention, the valve body can be displaced from the said first end position in the direction away from it under the influence of the activation element, and against the influence of the spring force of a spring means that acts upon the valve body. The activation element advantageously comprises a wax body.

The invention concerns also a motor vehicle according to the corresponding attached claims.

Other advantages and advantageous distinctive features of the invention are made clear by the description below.

### BRIEF DESCRIPTION OF DRAWINGS

The invention will be described in more detail below with the aid of embodiments presented as examples, with reference to the attached drawings, of which:
Figure 1 is a simplified sketch illustrating in principle a cooling system according to one embodiment of the invention,
Figure 2 is a simplified and partially cut-away view of a possible thermostat arrangement for the cooling system in Figure 1,
Figure 3 is a view that corresponds to Figure 2 of an alternative design of the thermostat arrangement, and
Figure 4 is a sketch corresponding to Figure 1 illustrating in principle a cooling system according to a second embodiment of the invention.

### DETAILED DESCRIPTION OF EMBODIMENTS OF THE INVENTION

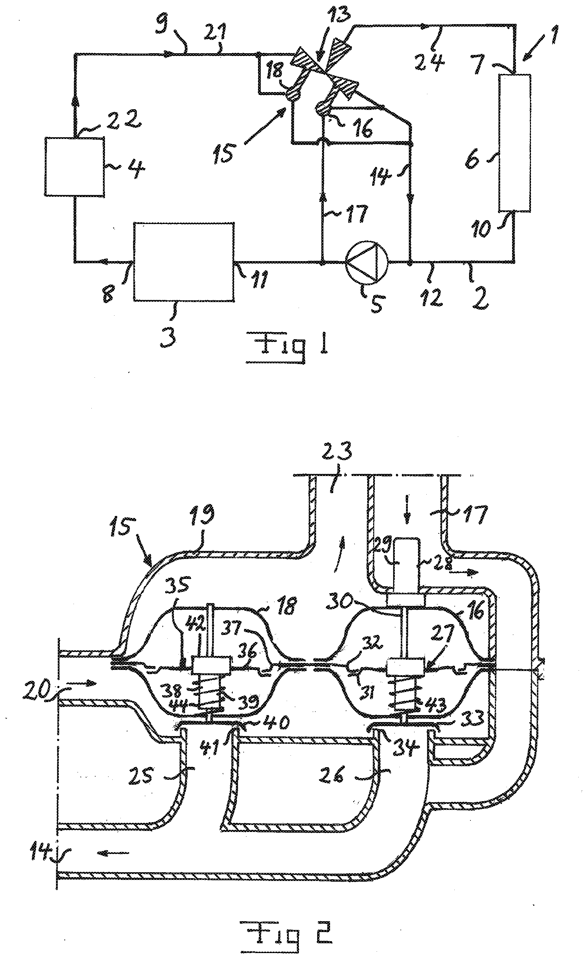

Figure 1 shows extremely schematically a cooling system 1 according to the present invention, intended for a motor vehicle. This cooling system comprises a cooling circuit 2 for the cooling of a combustion engine 3 in the vehicle and a hydrodynamic retarder 4 arranged to exert a braking influence on a driving shaft of the motor vehicle by means of a cooling fluid that flows around the cooling circuit, preferably in the form of water, possibly with the addition of additives such as glycol, to depress the freezing point. The retarder 4 is located in the cooling circuit 2 immediately downstream of the combustion engine 3. A cooling fluid pump 5 is connected into the cooling circuit in order to circulate the cooling fluid in the cooling circuit. Furthermore, a cooling fluid cooler 6 for the cooling of the cooling fluid is connected into the cooling circuit. The cooling fluid cooler 6 comprises a cooling fluid inlet 7 connected through the retarder 4 with a cooling fluid outlet 8 at the combustion engine through a first line 9 at the cooling circuit. The cooling fluid cooler 6 demonstrates further a cooling fluid outlet 10 that is connected to a cooling fluid inlet 11 at the combustion engine 3 through a second line 12 of the cooling circuit. The first line 9 is connected at a point 13 between the retarder and the cooling fluid cooler with the second line 12 through a third line 14 of the cooling circuit in order to allow through this recirculation of the cooling fluid from the retarder to the combustion engine without passage through the cooling fluid cooler.

A thermostat arrangement 15 (see also now Figure 2) demonstrates a first thermostat device 16 arranged to regulate the flow of cooling fluid to the cooling fluid cooler 6 and to the third line 14, depending on the temperature of the cooling fluid that is led into the thermostat device from a pilot line 17 that is a component of the cooling circuit, which pilot line is connected at its upstream end to the said second line 12.

The thermostat arrangement demonstrates further a second thermostat device 18 arranged to receive cooling fluid in the first line 9 from the retarder 4 and to regulate the flow of cooling fluid to the cooling fluid cooler 6 and to the said third line 14, depending on the temperature of the cooling fluid that has been received.

The two thermostat devices are arranged in one and the same thermostat housing 19 that demonstrates an inlet channel 20 that is common to the thermostat devices and that is connected through a first section of line 21 of the first line 9 to an outlet 22 at the retarder. The thermostat housing demonstrates further a first outlet channel 23 connected through a second section of line 24 of the first line 9 to the cooling fluid inlet 7 of the cooling fluid cooler and two further outlet channels 25, 26 connected to the said third line 14. The first thermostat device 16 demonstrates a valve body 27 that can be displaced in the thermostat housing 19 between different positions for the regulation of the flow of cooling fluid from the said retarder through the inlet channel 20 to the first outlet channel 23 and thus to the cooling fluid cooler and to the said third line 14. The thermostat device demonstrates a temperature-dependent activation element 28 that comprises a wax body 29 arranged to be met by the flow of cooling fluid in the pilot line 17 and a part 30 that can be displaced arranged such that during displacement thereof it takes with it the valve body. The activation element is arranged to influence the displacement position of the part 30 and thus the valve body, depending on the temperature of the cooling fluid that is received through the pilot line.

The valve body 27 demonstrates a valve means 31 in the form of a first plate element that is designed such that at a first end position of the valve body it is in contact with a second plate element 32 that forms a valve seating between an inlet in the first thermostat device connected to the inlet channel 20 and an outlet connected to the first outlet channel 23 in order through this contact to prevent cooling fluid from flowing through this thermostat device to the cooling fluid cooler. The first plate element 31 is arranged such that it can be displaced under the influence of the activation element away from the said position of contact with the second plate element 32 in order to open a connection between the inlet of the first thermostat device and the outlet to the cooling fluid cooler with effect from a first temperature of cooling fluid that arrives at the wax body 29 in the pilot line 17. It is appropriate that this first temperature be approximately +80 °C. The valve body 27 demonstrates also a second valve means 33 that can be received at a second end position of the valve body into a second valve seating 34 in order in this way to prevent cooling fluid that arrives at the first thermostat device from the retarder through the inlet channel 20 from flowing to the third line 14.

The second thermostat device 18 is designed in a manner similar to the first with respect to the valve body 35 with a valve means in the form of a first plate element 36 that is designed such that at a first end position of the valve body it is in contact with a second plate element 37 that forms a valve seating between an inlet in the second thermostat device connected to the inlet channel 20 and an outlet connected to the first outlet channel 23. The second thermostat device demonstrates an activation element 38 arranged to influence the displacement position of the first plate element 36 depending on the temperature of the cooling fluid that is received from the retarder through the inlet channel 20 and it demonstrates for this reason a wax body 39 arranged to be met by this cooling fluid. Thus, the activation element 38 at the second thermostat device 18 is designed such that it influences through a part 42 that can be displaced the first plate element 36 away from the contact against the second plate element 37 in order to open for flow of cooling fluid that arrives there in the cooling circuit onwards to the cooling fluid cooler with effect from a second temperature that it at least 5 K higher than the said first temperature. It is preferred that this second temperature be approximately 10 K higher than the first temperature.

Also the second thermostat device demonstrates a second valve means 40 that can be received at a second end position of the valve body 35 into a second valve seating 41 in order in this way to prevent cooling fluid that arrives at the second thermostat device from the retarder through the inlet channel 20 from flowing to the third line 14. The valve bodies of the two thermostat devices are influenced by the spring force of spring means 43, 44 towards the position that prevents flow of cooling fluid to the cooling fluid cooler 6.

The function of the cooling fluid system that has just been described is as follows: During normal driving each thermostat device will close the relevant connection between the inlet channel 20 and the outlet channel 23 to the cooling fluid cooler as long as the temperature of the cooling fluid that arrives at the first thermostat device 16 in the pilot line 17 lies under the said first temperature. This means that the cooling fluid will flow from the thermostat arrangement through the third line 14 to the cooling fluid inlet 11 of the combustion engine 10. When the combustion engine has heated the cooling fluid in the cooling circuit by a sufficient amount that the cooling fluid that arrives at the wax body 29 in the pilot line 17 has a temperature that exceeds the said first temperature, for example +80 °C, then the first thermostat device 16 will open for flow of cooling fluid that arrives through the inlet channel 20 onwards to the outlet channel 23 and thus to the cooling fluid cooler. At the same time a part of the cooling fluid will be returned through the third line 14 directly to the combustion engine 3 without passing through the cooling fluid cooler 6. The higher the temperature of the cooling fluid in the pilot line 17 becomes, the greater will be the fraction of the cooling fluid that arrives at the thermostat arrangement through the inlet channel 20 that is led onwards to the cooling fluid cooler. This acts, of course, in a direction to reduce the temperature of the cooling fluid in the pilot line, and this regulation will ensure that the temperature of the cooling fluid in the pilot line will be maintained close to the said first temperature, preferably to oscillate a maximal amount of 5 K below and above this temperature. In any case, the temperature of the cooling fluid that arrives at the thermostat arrangement through the inlet channel 20 will in this way not reach the said second temperature as long as the vehicle is not braked with the aid of the retarder 4.

During relatively hard retarder braking, on the other hand, the temperature of the cooling fluid that flows from the retarder will rise considerably and rapidly, and it will exceed the said second temperature, such that the second thermostat device will then immediately open a connection between the inlet channel 20 and the outlet channel 23 in order to lead cooling fluid to the cooling fluid cooler 6.

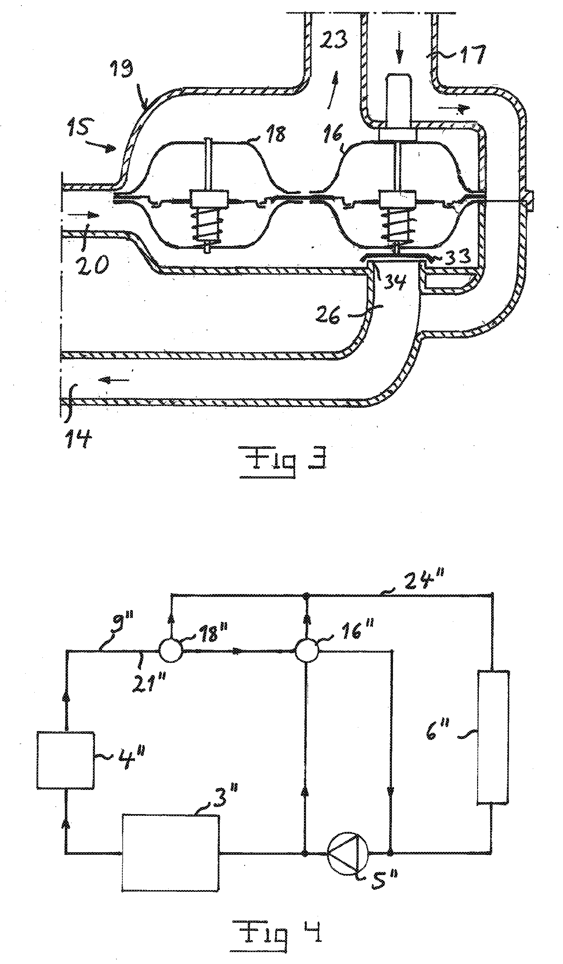

Figure 3 illustrates an alternative design of a thermostat arrangement arranged in a cooling circuit according to Figure 1, which differs from the arrangement in Figure 2 in that the second thermostat device 2 does not demonstrate a second valve means and has only one outlet channel 26 to the third line 14 exists. The function of this thermostat arrangement is otherwise the same as that of the one illustrated in Figure 2.

Figure 4 illustrates a cooling system according to a second embodiment of the invention that differs from the one shown in Figure 1 in that the two thermostat devices 16" and 18" are separated from each other, i.e. they are not arranged in the same thermostat housing. These thermostat devices, however, act together in the same functional manner as the thermostat devices according to Figures 2 and 3. It should, however, usually be advantageous to arrange the two thermostat devices next to each other in one and the same thermostat housing. The various components of this cooling system have the same reference numbers as the corresponding components in the cooling system according to Figure 1, with the addition of a double prime mark, ".

The invention is, naturally, not in any way limited to the embodiments described above: a number of possibilities for modifications of it should be obvious for one skilled in the arts, without for this reason deviating from the scope of the invention as it has been defined in the attached claims.

The two thermostat devices, for example, may very well exchange places such that the first thermostat device is physically arranged in the cooling circuit somewhat closer to the retarder than the second thermostat device.

## Claims

1. A cooling system for a motor vehicle comprising:
• a cooling circuit (2) for the cooling of a combustion engine (3) and a hydrodynamic retarder (4) that is arranged to exert braking influence onto a drive shaft of the motor vehicle, by means of a cooling fluid that flows in the cooling circuit
• a cooling fluid pump (5) for the circulation of the cooling fluid in the cooling circuit,
• a cooling fluid cooler (6) that is connected into the cooling circuit for the cooling of cooling fluid, whereby this cooling fluid cooler comprises a cooling fluid inlet (7) that is connected through the said retarder to a cooling fluid outlet (8) of the combustion engine (3) through a first line (9) of the cooling circuit and a cooling fluid outlet (10) that is connected to a cooling fluid inlet (11) of the combustion engine (3) through a second line (12) of the cooling circuit, whereby the said first line (9) is connected at a point (13) that lies between the retarder (4) and the cooling fluid cooler (6) to the said second line (12) through a third line (14) of the cooling circuit such that it allows through this line return of cooling fluid to the combustion engine (3) without passage through the said cooling fluid cooler (6), and
• a thermostat arrangement (15) with a first thermostat device (16) arranged to regulate the flow of cooling fluid to the cooling fluid cooler (6) and to the said third line (14), depending on the temperature of the cooling fluid that is led into the thermostat device from a pilot line (17) that is a component of the cooling circuit, which pilot line is connected at its upstream end to the said second line (12).
***characterised* in that** the retarder is designed to use the cooling fluid flowing in the cooling circuit as retarding medium, wherein the thermostat arrangement comprises a second thermostat device (18) arranged to receive cooling fluid in the first line (9) from the retarder (6) and to regulate the flow of cooling fluid to the cooling fluid cooler and to the said third line (14) depending on the temperature of the cooling fluid received, and that the second thermostat device (18) is designed to open for flow in the cooling circuit of cooling fluid that arrives at it onwards to the cooling fluid cooler (6) with effect from a second temperature that is at least 5 K higher than a first temperature of cooling fluid arriving at the first thermostat device (16) in the said pilot line (17) and with which this first thermostat device is designed to open for flow of cooling fluid that arrives at this thermostat device from the retarder (4) in the first line (9) of the cooling circuit onwards to the cooling fluid cooler (6).

2. The cooling system according to claim 1, ***characterised* in that** the second thermostat device (18) is designed to open for flow of cooling fluid to the cooling fluid cooler with effect from a second temperature that is 5-20 K, 5-15 K, 8-15 K or 8-12 K higher than the said first temperature.

3. The cooling system according to claim 1 or 2, ***characterised* in that** the said first temperature is 70-90 °C or 75-85 °C

4. The cooling system according to any one of the preceding claims, ***characterised* in that** the said two thermostat devices (16, 18) are arranged in one and the same thermostat housing (19) that demonstrates an inlet channel (20) that is common to the thermostat devices (16, 18) and that is connected through a first section (21) of line of the first line (9) to an outlet (22) of the retarder (4), and that the thermostat housing demonstrates at least one first outlet channel (23) connected through a second section (24) of line of the first line (9) to the cooling fluid inlet (7) of the cooling fluid cooler (6), and a second outlet channel (25, 26) connected to the said third line (14).

5. The cooling system according to claim 4, ***characterised* in that** a thermostat housing (19) demonstrates a single first outlet channel (23) common to the two thermostat devices (16, 18).

6. The cooling system according to any one of the preceding claims, ***characterised* in that** the said second thermostat device (18) demonstrates a valve body (35) that can be displaced between different positions for the regulation of the flow of cooling fluid from the said retarder (4) to the cooling fluid cooler (6) and to the said third line (14), a temperature-dependent activation element (38) and a displaceable part (42) designed such that when it is displaced it carries with it the valve body, that the activation element is arranged to influence the displacement position of the said part and in this way the valve body depending on the temperature of the cooling fluid that is received from the retarder (4), that the valve body demonstrates a valve device in the form of a first plate element (36) that is designed such that at a first end position of the valve body it is in contact with a second plate element (37) that forms a valve seating between an inlet in the second thermostat device from the retarder and an outlet to the cooling fluid cooler (6) such that through this contact it prevents cooling fluid from flowing through this thermostat device (18) to the cooling fluid cooler, and that the first plate element (36) is arranged such that it can be displaced under the influence of the activation element (38) away from the said position in which it is in contact with the second plate element (37) in order to open a connection between the inlet of the second thermostat device and the outlet to the cooling fluid cooler.

7. The cooling system according to any one of the preceding claims, ***characterised* in that** the first thermostat device (16) demonstrates a valve body (27) that can be displaced between different positions for the regulation of the flow of cooling fluid from the said retarder (4) to the cooling fluid cooler (6) and to the said third line (14), a temperature-dependent activation element (28) and a displaceable part (30) designed such that when it is displaced it carries with it the valve body, that the activation element is arranged to influence the displacement position of the said part and in this way the valve body depending on the temperature of the cooling fluid that is received through the pilot line (17), that the valve body demonstrates a valve device in the form of a first plate element (31) that is designed such that at a first end position of the valve body it is in contact with a second plate element (32) that forms a valve seating between an inlet in the first thermostat device (16) from the retarder (4) and an outlet to the cooling fluid cooler (6) such that through this contact it prevents cooling fluid from flowing through this thermostat device to the cooling fluid cooler, and that the first plate element (31) is arranged such that it can be displaced under the influence of the activation element (28) away from the said position in which it is in contact with the second plate element (32) in order to open a connection between the inlet of the first thermostat device and the outlet to the cooling fluid cooler.

8. The cooling system according to claim 6 or 7, ***characterised* in that** the said valve body (27, 35) comprises a second valve device (33, 40) that can be received when at a second end position of the valve body in a second valve seating (34, 41) in order in this way to prevent cooling fluid that arrives at the relevant thermostat device (16, 18) from the retarder (4) from flowing to the said third line (14).

9. The cooling system according to any one of claims 6-8, ***characterised* in that** the valve body (27, 35) can be displaced from the said first end position in a direction away from it under the influence of the activation element (28, 38) and against the influence of the spring force of a spring means (43, 44) that acts on the valve body.

10. A motor vehicle, in particular a wheeled motor vehicle, and in particular a lorry or bus, ***characterised* in that** it comprises a cooling system (1) according to any one of claims 1-9.

## Patentansprüche

1. Kühlsystem für ein Kraftfahrzeug, umfassend:
• einen Kühlkreislauf (2) zum Kühlen eines Verbrennungsmotors (3) und eines hydrodynamischen Retarders (4), der dazu eingerichtet ist, einen Bremseinfluss auf eine Antriebswelle des Kraftfahrzeugs mittels eines Kühlfluids, das in dem Kühlkreislauf fließt, auszuüben,
• eine Kühlfluidpumpe (5) für ein Zirkulieren des Kühlfluids in dem Kühlkreislauf,
• einen Kühlfluidkühler (6), der zu einem Kühlen des Kühlfluids in den Kühlkreislauf geschaltet ist, wobei der Kühlfluidkühler einen Kühlfluideinlass (7), der durch den Retarder mit einem Kühlfluidauslass (8) des Verbrennungsmotors (3) durch eine erste Leitung (9) des Kühlfluids verbunden ist, und einen Kühlfluidauslass (10), der mit einem Kühlfluideinlass (11) des Verbrennungsmotors (3) durch eine zweite Leitung (12) des Kühlkreislaufs verbunden ist, aufweist, wobei die erste Leitung (9) an einem Punkt (13), der zwischen dem Retarder (4) und dem Kühlfluidkühler (6) liegt, mit der zweiten Leitung (12) durch eine dritte Leitung (14) des Kühlkreislaufs verbunden ist, sodass durch diese Leitung eine Rückführung des Kühlfluids zu dem Verbrennungsmotor (3) ohne Durchtritt durch den Kühlfluidkühler (6) ermöglicht ist, und
• eine Thermostatanordnung (15) mit einer ersten Thermostatvorrichtung (16), die zu einem Regulieren eines Flusses von Kühlfluid zu dem Kühlfluidkühler (6) und zu der dritten Leitung (14) eingerichtet ist, in Abhängigkeit von einer Temperatur des Kühlfluids, das von einer Steuerleitung (17), welche eine Komponente des Kühlkreislaufs ist, in die Thermostatvorrichtung geleitet wird, wobei die Hauptleitung an ihrem stromabwärtigen Ende mit der zweiten Leitung (12) verbunden ist,
**dadurch gekennzeichnet, dass**
der Retarder dazu konzipiert ist, dass in dem Kühlkreislauf fließende Kühlfluid als Retardermedium zu verwenden, wobei die Thermostatanordnung eine zweite Thermostatvorrichtung (18) aufweist, die dazu eingerichtet ist, Kühlfluid in der ersten Leitung (9) von dem Retarder (6) entgegenzunehmen und den Fluss des Kühlfluids zu dem Kühlfluidkühler und zu der dritten Leitung (14) in Abhängigkeit von der Temperatur des entgegengenommenen Kühlfluids zu regulieren, und dadurch, dass die zweite Thermostatvorrichtung (18) dazu konzipiert ist, für einen Fluss in dem Kühlkreislauf von Kühlfluid, das auf den Kühlfluidkühler (6) zu bei dieser ankommt, ab einer zweiten Temperatur zu öffnen, die wenigstens 5 K höher ist als eine erste Temperatur von Kühlfluid, welches bei der ersten Thermostatvorrichtung (16) in der Steuerleitung (17) ankommt, und gemäß welcher die erste Thermostatvorrichtung konzipiert ist, für einen Fluss von Kühlfluid, welches bei dieser Thermostatvorrichtung von dem Retarder (4) in der ersten Leitung (9) des Kühlkreislaufs auf den Kühlfluidkühler (6) zu ankommt, zu öffnen.

2. Kühlsystem nach Anspruch 1, **dadurch gekennzeichnet, dass** die zweite Thermostatvorrichtung (18) dazu konfiguriert ist, für einen Fluss von Kühlfluid zu dem Kühlfluidkühler ab einer zweiten Temperatur zu öffnen, die 5-20 K, 5-15 K, 8-15 K oder 8-12 K höher ist als die erste Temperatur.

3. Kühlsystem nach Anspruch 1 oder 2, **dadurch gekennzeichnet, dass** die erste Temperatur 70-90 °C oder 75-85 °C ist.

4. Kühlsystem nach einem der vorhergehenden Ansprüche, **dadurch gekennzeichnet, dass** die beiden Thermostatvorrichtungen (16, 18) in ein und demselben Thermostatgehäuse (19) angeordnet sind, welches einen den Thermostatvorrichtungen (16, 18) gemeinsamen Einlasskanal (20) aufweist, der durch einen ersten Leitungsabschnitt (21) der ersten Leitung (9) mit einem Auslass (22) des Retarders (4) verbunden ist; und dadurch, dass das Thermostatgehäuse zumindest einen ersten Auslasskanal (23), der durch einen zweiten Leitungsabschnitt (24) der ersten Leitung (9) mit dem Kühlfluideinlass (7) des Kühlfluidkühlers (6) verbunden ist, und einen zweiten Auslasskanal (25, 26), der mit der dritten Leitung (14) verbunden ist, aufweist.

5. Kühlsystem nach Anspruch 4, **dadurch gekennzeichnet, dass** das Thermostatgehäuse (19) einen den beiden Thermostatvorrichtung (16,18) gemeinsamen Auslasskanal (23) aufweist.

6. Kühlsystem nach einem der vorhergehenden Ansprüche, **dadurch gekennzeichnet, dass** die zweite Thermostatvorrichtung (18) einen Ventilkörper (35), der zu einem Regulieren des Flusses von Kühlfluid von dem Retarder (4) zu dem Kühlfluidkühler (6) und zu der dritten Leitung (14) zwischen verschiedenen Positionen verschiebbar ist, ein temperaturabhängiges Aktivierungselement (38) und einen verschiebbaren Teil (42) aufweist, welcher derart konfiguriert ist, dass dieser bei dessen Verschieben den Ventilkörpern mitnimmt; dadurch, dass das Aktivierungselement dazu eingerichtet ist, die Verschiebeposition des verschiebbaren Teils und auf diese Weise den Ventilkörper in Abhängigkeit von der Temperatur des Kühlfluids, das von dem Retarder (4) entgegengenommen wird, zu beeinflussen; dadurch, dass der Ventilkörpern eine Ventilvorrichtung in Gestalt eines ersten Plattenelements (36) aufweist, welches derart konfiguriert ist, dass es an einer ersten Endposition des Ventilkörpers mit einem zweiten Plattenelement (37) in Kontakt kommt, das einen Ventilsitz zwischen einem Einlass von dem Retarder in die zweite Thermostatvorrichtung und einen Auslass zu dem Kühlfluidkühler (6) ausbildet, sodass es durch diesen Kontakt Kühlfluid daran hindert, durch die Thermostatvorrichtung (18) zu dem Kühlfluidkühler zu fließen; und dadurch, dass das erste Plattenelement (36) derart eingerichtet ist, dass es unter Beeinflussung des Aktivierungselements (38) weg von der Position, in welcher es mit dem zweiten Plattenelement (37) in Kontakt ist, verschoben werden kann, um eine Verbindung zwischen dem Einlass der zweiten Thermostateinrichtung und dem Auslass des Kühlfluidkühlers zu öffnen.

7. Kühlsystem nach einem der vorhergehenden Ansprüche, **dadurch gekennzeichnet, dass** die erste Thermostatvorrichtung (16) einen Ventilkörper (27), der zu einem Regulieren des Flusses von Kühlfluid von dem Retarder (4) zu dem Kühlfluidkühler (6) und zu der dritten Leitung (14) zwischen verschiedenen Positionen verschiebbar ist, ein temperaturabhängiges Aktivierungselement (28) und einen verschiebbaren Teil (30) aufweist, welcher derart konfiguriert ist, dass dieser bei dessen Verschieben den Ventilkörpern mitnimmt; dadurch, dass das Aktivierungselement dazu eingerichtet ist, die Verschiebeposition des verschiebbaren Teils und auf diese Weise den Ventilkörper in Abhängigkeit von der Temperatur des Kühlfluids, das von der Steuerleitung (17) entgegengenommen wird, zu beeinflussen; dadurch, dass der Ventilkörpern eine Ventilvorrichtung in Gestalt eines ersten Plattenelements (31) aufweist, welches derart konfiguriert ist, dass es an einer ersten Endposition des Ventilkörpers mit einem zweiten Plattenelement (32) in Kontakt kommt, das einen Ventilsitz zwischen einem Einlass von dem Retarder in die erste Thermostatvorrichtung (16) und einen Auslass zu dem Kühlfluidkühler (6) ausbildet, sodass es durch diesen Kontakt Kühlfluid daran hindert, durch die Thermostatvorrichtung zu dem Kühlfluidkühler zu fließen; und dadurch, dass das erste Plattenelement (31) derart eingerichtet ist, dass es unter Beeinflussung des Aktivierungselements (28) weg von der Position, in welcher es mit dem zweiten Plattenelement (32) in Kontakt ist, verschoben werden kann, um eine Verbindung zwischen dem Einlass der zweiten Thermostateinrichtung und dem Auslass des Kühlfluidkühlers zu öffnen.

8. Kühlsystem nach Anspruch 6 oder 7, **dadurch gekennzeichnet, dass** der Ventilkörper (27, 35) eine zweite Ventilvorrichtung (33, 40) aufweist, die, wenn sie sich in einer zweiten Endposition des Ventilkörpers befindet, in einem zweiten Ventilsitz (34, 41) aufgenommen werden kann, um auf diese Weise Kühlfluid, welches von dem Retarder (4) an der entsprechenden Thermostatvorrichtung (16, 18) ankommt, daran zu hindern, zu der dritten Leitung (14) zu fließen.

9. Kühlsystem nach einem der Ansprüche 6 bis 8, **dadurch gekennzeichnet, dass** der Ventilkörper (27, 35) ausgehend von der ersten Endposition in eine Richtung von dieser weg unter Einfluss des Aktivierungselements (28, 38) und gegen den Einfluss einer Federkraft eines Federmittels (43, 44), welches auf den Ventilkörpern wirkt, verschiebbar ist.

10. Kraftfahrzeug, insbesondere Radkraftfahrzeug und insbesondere ein Lastwagen oder Bus, **dadurch gekennzeichnet, dass** es ein Kühlsystem (1) nach einem der Ansprüche 1 bis 9 aufweist.

## Revendications

1. Système de refroidissement pour un véhicule à moteur, comprenant :
• un circuit de refroidissement (2) pour le refroidissement d'un moteur à combustion (3) et un retardateur hydrodynamique (4) qui est agencé de façon à exercer une influence de freinage sur un arbre d'entraînement du véhicule à moteur, à l'aide d'un fluide de refroidissement qui s'écoule dans le circuit de refroidissement,
• une pompe de fluide de refroidissement (5) pour la circulation du fluide de refroidissement dans le circuit de refroidissement,
• un refroidisseur de fluide de refroidissement (6) qui est relié à l'intérieur du circuit de refroidissement pour le refroidissement du fluide de refroidissement, où ce refroidisseur de fluide de refroidissement comprend une entrée de fluide de refroidissement (7) qui est reliée par l'intermédiaire dudit retardateur à une sortie de fluide de refroidissement (8) du moteur à combustion (3) par l'intermédiaire d'une première ligne (9) du circuit de refroidissement et une sortie de fluide de refroidissement (10) qui est reliée à une entrée de fluide de refroidissement (11) du moteur à combustion (3) par l'intermédiaire d'une deuxième ligne (12) du circuit de refroidissement, où ladite première ligne (9) est reliée en un point (13) qui se trouve entre le retardateur (4) et le refroidisseur de fluide de refroidissement (6) à ladite deuxième ligne (12) par l'intermédiaire d'une troisième ligne (14) du circuit de refroidissement, de telle sorte que cela permet, par l'intermédiaire de cette ligne, un retour de fluide de refroidissement vers le moteur à combustion (3) sans passage à travers ledit refroidisseur de fluide de refroidissement (6), et
• un agencement de thermostat (15) avec un premier dispositif de thermostat (16) agencé de façon à réguler l'écoulement de fluide de refroidissement vers le refroidisseur de fluide de refroidissement (6) et vers ladite troisième ligne (14), en fonction de la température du fluide de refroidissement qui est acheminé dans le dispositif de thermostat à partir d'une ligne pilote (17), qui est un composant du circuit de refroidissement, cette ligne pilote étant reliée à son extrémité amont à ladite deuxième ligne (12),
**caractérisé en ce que** :
le retardateur est conçu de façon à utiliser le fluide de refroidissement s'écoulant dans le circuit de refroidissement comme milieu de retardement, dans lequel l'agencement de thermostat comprend un deuxième dispositif de thermostat (18) agencé de façon à recevoir du fluide de refroidissement dans la première ligne (9) en provenance du retardateur (6) et à réguler l'écoulement de fluide de refroidissement vers le refroidisseur de fluide de refroidissement et vers ladite troisième ligne (14) en fonction de la température du fluide de refroidissement reçu, et **en ce que** le deuxième dispositif de thermostat (18) est conçu de façon à s'ouvrir pour un écoulement, dans le circuit de refroidissement, de fluide de refroidissement qui arrive sur celui-ci en continuant vers le refroidisseur de fluide de refroidissement (6) avec un effet à partir d'une deuxième température qui est supérieure d'au moins 5 K à une première température de fluide de refroidissement arrivant sur le premier dispositif de thermostat (16) dans ladite ligne pilote (17), et ce premier dispositif de thermostat étant conçu de façon à s'ouvrir pour un écoulement de fluide de refroidissement qui arrive sur ce dispositif de thermostat en provenance du retardateur (4) dans la première ligne (9) du circuit de refroidissement en continuant vers le refroidisseur de fluide de refroidissement (6).

2. Système de refroidissement selon la revendication 1, **caractérisé en ce que** le deuxième dispositif de thermostat (18) est conçu de façon à s'ouvrir pour un écoulement de fluide de refroidissement vers le refroidisseur de fluide de refroidissement avec un effet à partir d'une deuxième température qui est supérieure de 5 à 20 K, de 5 à 15 K, de 8 à 15 K ou de 8 à 12 K à ladite première température.

3. Système de refroidissement selon la revendication 1 ou 2, **caractérisé en ce que** ladite première température est comprise entre 70 et 90° C ou entre 75 et 85° C.

4. Système de refroidissement selon l'une quelconque des revendications précédentes, **caractérisé en ce que** lesdits deux dispositifs de thermostat (16, 18) sont disposés dans un seul et même boîtier de thermostat (19), qui présente un canal d'entrée (20) qui est commun aux dispositifs de thermostat (16, 18) et qui est relié par l'intermédiaire d'une première partie (21) de ligne de la première ligne (9) à une sortie (22) du retardateur (4), et **en ce que** le boîtier de thermostat présente au moins un premier canal de sortie (23) relié par l'intermédiaire d'une deuxième partie (24) de ligne de la première ligne (9) à l'entrée de fluide de refroidissement (7) du refroidisseur de fluide de refroidissement (6), et un deuxième canal de sortie (25, 26) relié à ladite troisième ligne (14).

5. Système de refroidissement selon la revendication 4, **caractérisé en ce qu'**un boîtier de thermostat (19) présente un premier canal de sortie unique (23) commun aux deux dispositifs de thermostat (16, 18).

6. Système de refroidissement selon l'une quelconque des revendications précédentes, **caractérisé en ce que** ledit deuxième dispositif de thermostat (18) présente un corps de vanne (35) qui peut être déplacé entre différentes positions pour la régulation de l'écoulement de fluide de refroidissement dudit retardateur (4) au refroidisseur de fluide de refroidissement (6) et à ladite troisième ligne (14), un élément d'activation dépendant de la température (38) et une partie pouvant être déplacée (42) conçue de telle sorte que, lorsqu'elle est déplacée, elle porte avec elle le corps de vanne, **en ce que** l'élément d'activation est agencé de façon à influencer la position de déplacement de ladite partie, et, de cette façon, du corps de vanne en fonction de la température du fluide de refroidissement qui est reçu en provenance du retardateur (4), **en ce que** le corps de vanne présente un dispositif de vanne sous la forme d'un premier élément de plaque (36) qui est conçu de telle sorte que, dans une première position d'extrémité du corps de vanne, il soit en contact avec un deuxième élément de plaque (37) qui constitue un siège de vanne entre une entrée dans le deuxième dispositif de thermostat à partir du retardateur et une sortie vers le refroidisseur de fluide de refroidissement (6), de telle sorte que, par l'intermédiaire de ce contact, il empêche du fluide de refroidissement de s'écouler à travers ce dispositif de thermostat (18) vers le refroidisseur de fluide de refroidissement, et **en ce que** le premier élément de plaque (36) est agencé de telle sorte qu'il puisse être éloigné, sous l'influence de l'élément d'activation (38), de ladite position dans laquelle il est en contact avec le deuxième élément de plaque (37), de façon à ouvrir une liaison entre l'entrée du deuxième dispositif de thermostat et la sortie vers le refroidisseur de fluide de refroidissement.

7. Système de refroidissement selon l'une quelconque des revendications précédentes, **caractérisé en ce que** le premier dispositif de thermostat (16) présente un corps de vanne (27) qui peut être déplacé entre différentes positions pour la régulation de l'écoulement de fluide de refroidissement dudit retardateur (4) au refroidisseur de fluide de refroidissement (6) et à ladite troisième ligne (14), un élément d'activation dépendant de la température (28) et une partie pouvant être déplacée (30) conçue de telle sorte que, lorsqu'elle est déplacée, elle porte avec elle le corps de vanne, **en ce que** l'élément d'activation est agencé de façon à influencer la position de déplacement de ladite partie, et, de cette façon, du corps de vanne en fonction de la température du fluide de refroidissement qui est reçu par l'intermédiaire de la ligne pilote (17), **en ce que** le corps de vanne présente un dispositif de vanne sous la forme d'un premier élément de plaque (31) qui est conçu de telle sorte que, dans une première position d'extrémité du corps de vanne, il soit en contact avec un deuxième élément de plaque (32) qui constitue un siège de vanne entre une entrée dans le premier dispositif de thermostat (16) à partir du retardateur (4) et une sortie vers le refroidisseur de fluide de refroidissement (6), de telle sorte que, par l'intermédiaire de ce contact, il empêche du fluide de refroidissement de s'écouler à travers ce dispositif de thermostat vers le refroidisseur de fluide de refroidissement, et **en ce que** le premier élément de plaque (31) est agencé de telle sorte qu'il puisse être éloigné, sous l'influence de l'élément d'activation (28), de ladite position dans laquelle il est en contact avec le deuxième élément de plaque (32), de façon à ouvrir une liaison entre l'entrée du premier dispositif de thermostat et la sortie vers le refroidisseur de fluide de refroidissement.

8. Système de refroidissement selon la revendication 6 ou 7, **caractérisé en ce que** ledit corps de vanne (27, 35) comprend un deuxième dispositif de vanne (33, 40) qui peut être reçu, lorsqu'il est dans une deuxième position d'extrémité du corps de vanne, dans un deuxième siège de vanne (34, 41) de façon à empêcher, de cette manière, un fluide de refroidissement qui arrive au dispositif de thermostat concerné (16, 18) en provenance du retardateur (4), de s'écouler vers ladite troisième ligne (14).

9. Système de refroidissement selon l'une quelconque des revendications 6 à 8, **caractérisé en ce que** le corps de vanne (27, 35) peut être déplacé à partir de ladite première position d'extrémité dans une direction s'éloignant de celle-ci sous l'influence de l'élément d'activation (28, 38) et à l'encontre de l'influence de la force de rappel de moyens de rappel (43, 44) qui agissent sur le corps de vanne.

10. Véhicule à moteur, en particulier véhicule à moteur à roues, et en particulier camion ou autocar, **caractérisé en ce qu'**il comprend un système de refroidissement (1) selon l'une quelconque des revendications 1 à 9.
